# EUROPÄISCHE PATENTANMELDUNG

(11) **EP 3 885 287 A1**
(43) Veröffentlichungstag der Anmeldung: **29.09.2021**
(21) Anmeldenummer: 21152310.5
(22) Anmeldetag: 19.01.2021
(51) Int. Cl.: B65G 17/08, B60D 1/173, B61G 5/02, B65G 47/96

(54) **KOPPELEINRICHTUNG ZUM GELENKIGEN VERBINDEN VON ZWEI ELEMENTEN EINER FÖRDER- UND/ODER SORTIER-VORRICHTUNG UND ENTSPRECHENDE FÖRDER- UND/ODER SORTIER-VORRICHTUNG**

(30) Priorität: 26.03.2020 DE 102020108418
(71) Anmelder: Deutsche Post AG, 53113 Bonn (DE)
(72) Erfinder: Grafe, Wolfram, 18107 Elmenhorst (DE); Hartmann, Bernd, 53501 Grafschaft-Leimersdorf (DE); Loh, Hillar, 53859 Niederkassel (DE)
(74) Vertreter: Michalski Hüttermann & Partner Patentanwälte mbB

(57) **Zusammenfassung**

Gegenstand der Erfindung ist eine Koppeleinrichtung (14) zum gelenkigen Verbinden von zwei Elementen (12) einer Vorrichtung (10) zum Fördern und/oder Sortieren von Stückgütern, wobei die Koppeleinrichtung (10) je ein Ende (24, 26) der beiden Elemente (12) bezüglich mindestens einer Drehachse (20) in einer Ebene zu beiden Seiten (24, 26) hin gelenkig verbindet und sich die beiden Enden (24, 26) in einer Nulllage diametral gegenüberliegen.
Es ist vorgesehen, dass die Koppeleinrichtung (14) derart eingerichtet ist, dass - ausgehend von einer jeweiligen Mittelachse (28) der beiden Enden (24, 26) - die Drehachse (20) bei einer Gelenkbewegung in Richtung der einen Seite (24) auf dieser einen Seite (24) der Mittelachsen (28) und bei einer Gelenkbewegung in Richtung der anderen Seite (26) auf dieser anderen Seite (26) der jeweiligen Mittelachse (28) liegt.

Gegenstand der Erfindung ist weiterhin eine entsprechende Vorrichtung (10) zum Fördern und/oder Sortieren von Stückgütern.

## Beschreibung

### Technisches Gebiet

Die Erfindung betrifft eine Koppeleinrichtung zum gelenkigen Verbinden von zwei Elementen einer Vorrichtung zum Fördern und/oder Sortieren von Stückgütern, wobei die Koppeleinrichtung je ein Ende der beiden Elemente bezüglich mindestens einer Drehachse in einer Ebene zu beiden Seiten hin gelenkig verbindet und sich die beiden Enden in einer Nulllage diametral gegenüberliegen.

Die Erfindung betrifft weiterhin eine Vorrichtung zum Fördern und/oder Sortieren von Stückgütern mit mehreren Elementen zur Handhabung der Stückgüter und mindestens einer Koppeleinrichtung, die je zwei der in Serie angeordneten Elemente miteinander gelenkig verbindet.

### Hintergrund der Erfindung

Eine derartige Vorrichtung zum Fördern und/oder Sortieren von Stückgütern ist beispielsweise ein sogenannter Sorter wie etwa ein Kreissorter. Solche Kreissorter setzen sich aus hintereinander gereihten Elementen bzw. Wagen für die einzelnen Stückgüter zusammen, die vergleichbar mit einer Kette durch Schienen geführt auf einer vorgegebenen Bahn laufen. Diese Elemente des Sorters werden auch als Zellen bzw. Sorterzellen bezeichnet. Um die Elemente auch durch Kurven führen zu können, müssen diese untereinander einen Abstand entsprechend des Kurvenradius aufweisen, damit die inneren Ecken eines entsprechenden Elements beim Durchlauf einer Kurve nicht aneinander stoßen. Hierzu sind die einzelnen Elemente mit Koppeleinrichtungen (auch als Kupplungen bezeichnet) verbunden, die mittig der Zellen angeordnet sind, um durch Ihre Länge den erforderlichen Abstand der einzelnen Zellen zueinander zu gewährleisten.

Im Umkehrschluss bedeutet dies, dass der Abstand benachbarter Elemente zueinander lediglich im Durchlaufen von den entsprechenden Kurven begründet ist. In den geraden Segmenten eines Sorters ist dieser Abstand nicht erforderlich. Da die Höhe der möglichen Sortierleistung neben der Geschwindigkeit des Sorters durch die Anzahl von Sorterelemente bezogen auf die Sorterlänge bestimmt wird, ist eine Verkürzung der Koppeleinrichtungen und damit eine Erhöhung der Elemente-Anzahl bei gleichen Dimensionen des Sorters möglich.

Die Druckschrift DE 10 2016 104 943 A1 zeigt eine Vorrichtung zum Sortieren von Stückgütern, also einen Sorter, mit mehreren Sortierelementen und mindestens einer Koppeleinrichtung, die je zwei der in Serie angeordneten Elemente miteinander gelenkig verbindet. Die Koppeleinrichtung ist als eine Art Gelenkkupplung mit zwei gelenkig verbundenen Kupplungsteilen ausgebildet, die an die entsprechenden Enden der Elemente angebunden sind.

### Beschreibung der Erfindung

Ausgehend von dieser Situation ist es Aufgabe der vorliegenden Erfindung, Maßnahmen anzugeben, die es ermöglichen auch relativ eng gepackte Elemente einer Vorrichtung zum Fördern und/oder Sortieren von Stückgütern auf Kurvenbahnen zu führen.

Die Aufgabe der Erfindung wird durch die Merkmale der unabhängigen Ansprüche gelöst. Vorteilhafte Ausgestaltungen sind in den Unteransprüchen angegeben.

Demnach wird die Aufgabe gelöst durch eine Koppeleinrichtung zum gelenkigen Verbinden von zwei Elementen einer Vorrichtung zum Fördern und/oder Sortieren von Stückgütern, bei der diese Koppeleinrichtung je ein Ende der beiden Elemente bezüglich mindestens einer Drehachse in einer Ebene zu beiden Seiten hin gelenkig verbindet und sich die beiden Enden in einer Nulllage diametral gegenüberliegen, wobei die Koppeleinrichtung derart eingerichtet ist, dass- ausgehend von einer jeweiligen Mittelachse der beiden Enden - die Drehachse bei einer Gelenkbewegung in Richtung der einen Seite auf dieser einen Seite der Mittelachsen und bei einer Gelenkbewegung in Richtung der anderen Seite auf dieser anderen Seite der jeweiligen Mittelachse liegt. Auf diese Weise wird gewährleistet, dass die entsprechenden Elemente auch bei einer relativ kurzen Koppeleinrichtung um enge Kurvenbahnen geführt werden können. Dabei ist insbesondere vorgesehen, dass die Gelenkbewegung der Koppeleinrichtung immer nur um eine Drehachse erfolgt. Oftmals ist bei einer derartigen Koppeleinrichtung in Nulllage die Lage der Drehachse nicht eindeutig bestimmt, da die Lage der Drehachse -je nachdem zu welcher Seite die Gelenkbewegung erfolgt- instantan von der einen zur anderen Seite wechselt.

Ein wesentlicher Punkt der Erfindung ist also, dass die Lage der Drehachse für die Gelenkbewegung zur einen Seite eine andere ist als die Lage der Drehachse für die Gelenkbewegung zur anderen Seite, wobei die jeweilige Lage der Drehachse der jeweiligen Seite zugewandt ist, in deren Richtung die Gelenkbewegung, also ein entsprechendes Abknicken, aktuell erfolgt.

Gemäß einer bevorzugten Ausgestaltung der Erfindung ist vorgesehen, dass die Koppeleinrichtung eingerichtet ist, die unterschiedlichen Lagen der Drehachse
(a) aus zwei oder mehr als zwei vorgegebenen Achslagen auszuwählen oder
(b) durch Verschieben der Drehachse einzustellen.
Bei Alternative (a) kommt es zu einem in der Regel sprunghaften Wechsel zwischen den vorgegebenen Achslagen während es bei Alternative (b) zu einem kontinuierlichen Verschieben der aktuellen Lage der Drehachse kommt.

Gemäß einer weiteren bevorzugten Ausgestaltung der Erfindung ist vorgesehen, dass die Koppeleinrichtung zwei gegenläufig verschwenkbare Koppelelemente identischer Länge aufweist. Diese sind mit jedem der beiden Enden der Elemente gelenkig verbunden, wobei die entsprechenden Gelenke am jeweiligen Ende einen Abstand aufweisen, der der Länge der Koppelelemente entspricht.

Insbesondere ist vorgesehen, dass die Koppeleinrichtung eingerichtet ist, mit den beiden Enden der Elemente eine Viergelenkkette zu bilden. Eine Viergelenkkette wird in der Regel durch zwei Lager mit Gelenken definierter Position sowie drei über zwei weitere Gelenke gelenkig miteinander verbundene Glieder beschrieben, sodass ein viergliedriges Koppelsystem mit vier Drehgelenken entsteht. Für die Verwendung innerhalb der Koppeleinrichtung sind nun - im Bild der Viergelenkkette - die jeweilige Länge der Glieder der Gelenkkette und der Abstand der beiden Lager alle gleich. Dementsprechend wird die Viergelenkkette bei der Verwendung innerhalb der Koppeleinrichtung nicht in der üblichen Art als Kurbelschwinge, Doppelschwinge oder Doppelkurbel betrieben, sondern so, dass jeweils ein gelagertes Glied parallel zur Anordnung der Lager verläuft und die anderen beiden Glieder, also das jeweils andere gelagerte Glied und das von dem anderen Element gebildete Glied der Gelenkkette, parallel zueinander wahlweise um das eine oder das andere Lager herum schwenken. Diese können dann als gegenläufig verschwenkbare Koppelelemente identischer Länge aufgefasst werden.

Alternativ ist vorgesehen, dass die Koppeleinrichtung biegeschlaffe Koppelelemente umfasst, die die beiden Elemente gelenkig verbinden. Dieser Mechanismus ist von einem "Jakobsleiter" genannten Spielzeug bekannt. Die biegeschlaffen Koppelelemente sind insbesondere als Bänder ausgebildet. Sie verlaufen zwischen den Enden der Elemente kreuzweise. Dabei bildet sich in Draufsicht ein Kreuzungspunkt, der die entsprechende Drehachse für die Gelenkbewegung der Koppeleinrichtung markiert. Diese Drehachse ist verschieblich, sodass sich bei dieser Ausgestaltung der Koppeleinrichtung die unterschiedlichen Lagen der Drehachse durch Verschieben der Drehachse entlang des Zwischenraums zwischen den Enden einstellen. Für den Einsatz bei dem besagten Aneinanderkoppeln von Elementen bzw. Wagen können Ketten, Seile, Bänder oder Riemen zur Verwendung kommen.

Gemäß einer anderen alternativen Ausgestaltung der Erfindung ist vorgesehen, dass die Koppeleinrichtung ein Doppelgelenk in Art eines Pendeltürscharniers aufweist bzw. als solches ausgebildet ist. Ein Pendeltürscharnier bzw. Pendeltürband ist mit zwei federbelasteten Bändern versehen und ermöglicht ein Durchschwingen von Pendeltüren in beide Durchgangsrichtungen. Bekannt sind solche Türen beispielsweise als Saloontüren, wie man sie aus Western kennt. Auch auf diese Art kann die Lage der Drehachse für die Gelenkbewegung von der einen zur anderen Seite gewechselt werden.

Gemäß noch einer weiteren bevorzugten Ausgestaltung der Erfindung ist vorgesehen, dass bei aus der Nulllage herausbewegter Anordnung der beiden Elemente deren Abstand voneinander nur von auf der aktuell genutzten Drehachse liegenden Bauteilen der Koppeleinrichtung bestimmt wird.

Weiterhin ist mit Vorteil vorgesehen, dass der Abstand A der Lagen der Drehachse bei Gelenkbewegung zur einen Seite und zur anderen Seite größer ist, als die den Abstand zwischen den Enden der entsprechenden Elemente bestimmende Länge 1 der Koppeleinrichtung.

Die eingangs erwähnte Aufgabe der Erfindung wird weiterhin gelöst durch eine Vorrichtung zum Fördern und/oder Sortieren von Stückgütern mit (i) mehreren Elementen zur Handhabung der Stückgüter und (ii) mindestens einer Koppeleinrichtung, die je zwei der in Serie angeordneten Elemente miteinander gelenkig verbindet. Dabei ist vorgesehen, dass die Koppeleinrichtung oder zumindest eine der Koppeleinrichtungen, vorzugsweise alle Koppeleinrichtungen, als vorstehend genannte Koppeleinrichtung ausgebildet ist/sind.

Gemäß einer bevorzugten Ausgestaltung der erfindungsgemäßen Vorrichtung ist vorgesehen, dass die Breite der Elemente im Wesentlichen dem Abstand A der unterschiedlichen Lagen der Drehachse entspricht. Die Lage der Drehachse befindet sich also an einem Eckpunkt auf der Seite, zu der die Gelenkbewegung aktuell erfolgt.

Gemäß einer weiteren bevorzugten Ausgestaltung der erfindungsgemäßen Vorrichtung ist vorgesehen, dass die Vorrichtung als eine Sorter genannte Sortier- und/oder Verteilvorrichtung ausgestaltet ist. Dabei sind die folgenden Arten von Sortern bekannt: Kippschalensorter (Tilt tray sorter), Quergurtsorter (Belt tray sorter), Schuhsorter (Sliding shoe sorter), Fallklappensorter, Kammsorter, Helixsorter, Kreissorter bzw. Ringsorter und Taschensorter. Besonders bevorzugt ist die Vorrichtung als Kreissorter ausgestaltet.

### Kurze Beschreibung der Zeichnungen

Nachfolgend wird die Erfindung unter Bezugnahme auf die anliegenden Zeichnungen anhand bevorzugter Ausführungsbeispiele näher erläutert.

In den Zeichnungen zeigen
- Fig. 1: eine Draufsicht auf eine Reihe von aneinander gekoppelten Elementen einer Vorrichtung zum Fördern und/oder Sortieren von Stückgütern gemäß einem bevorzugten Ausführungsbeispiel der Erfindung,
- Fig. 2: zwei Elemente der Vorrichtung und eine die beiden Elemente gelenkig verbindende Koppeleinrichtung gemäß einer bevorzugten Ausführungsform der Erfindung,
- Fig. 3: eine Draufsicht auf eine Reihe von aneinander gekoppelten Elementen der Vorrichtung zum Fördern und/oder Sortieren von Stückgütern gemäß einem weiteren bevorzugten Ausführungsbeispiel der Erfindung und
- Fig. 4: eine Draufsicht auf eine Reihe von aneinander gekoppelten Elementen der Vorrichtung zum Fördern und/oder Sortieren von Stückgütern gemäß noch einem weiteren bevorzugten Ausführungsbeispiel der Erfindung.

### Detaillierte Beschreibung der Ausführungsbespiele

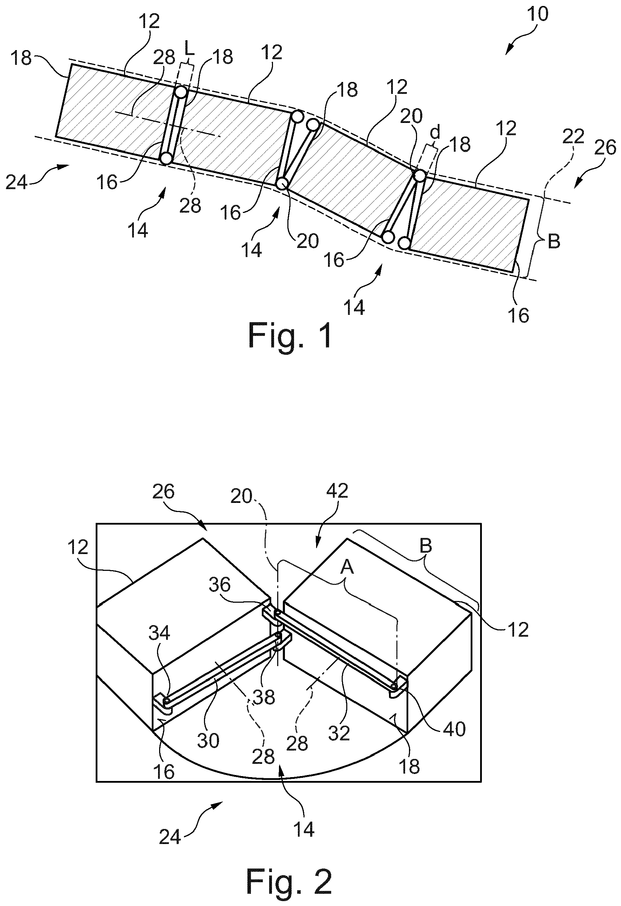

Die Fig. 1 zeigt eine Draufsicht auf wesentliche Teile einer Vorrichtung 10 zum Fördern und/oder Sortieren von (nicht gezeigten) Stückgütern, nämlich deren Elemente 12 zur Handhabung der Stückgüter und entsprechende Koppeleinrichtungen 14 zum gelenkigen Verbinden der in Serie angeordneten Elemente 12 miteinander. Die Koppeleinrichtungen 14 sind dabei zwischen den einander gegenüberliegenden Enden 16, 18 von zwei unmittelbar hintereinander angeordneten Elementen 12 angeordnet und verbinden diese bezüglich einer jeweiligen Drehachse 20 gelenkig. Dabei liegen sich die beiden Enden 16, 18 in einer Nulllage der gelenkigen Verbindung diametral gegenüber. Diese Situation ist bei den beiden Elementen 12 auf der linken Seite der Fig. 1 gegeben.

Die Vorrichtung 10 ist hier im Beispiel eine "Sorter" genannte Sortier- und/oder Verteilvorrichtung. Bei einer derartigen Vorrichtung 10 werden die in Serie angeordneten Elemente 12 zur Handhabung der Stückgüter auf einer Bahn 22 durch (den eingezeichneten Markierungen der Bahn 22 entsprechenden) Schienen geführt bewegt, wobei die Bahn 22 in einer Ebene liegt und Kurven aufweist. Mit anderen Worten wird die Serienanordnung der Elemente 12 beidseitig, also auf beiden Seiten 24, 26, auf der Bahn 22 geführt. Die Elemente 12 sind dabei recht nah aneinander gereiht und die Koppeleinrichtungen 14 dementsprechend kurz. Eine solche Koppeleinrichtung 14 wird daher auch als Kurzkupplung bezeichnet.

Um die Elemente 12 auch bei dieser dichten Reihung durch die Kurven führen zu können, ist die Koppeleinrichtung 14 derart eingerichtet, dass- ausgehend von einer gedachten jeweiligen Mittelachse 28 der beiden Elemente 12 - die Drehachse 20 bei einer Gelenkbewegung der Koppeleinrichtung 14 in Richtung der einen Seite 24 auf dieser einen Seite 24 der jeweiligen Mittelachse und bei einer Gelenkbewegung der Koppeleinrichtung 14 in Richtung der gegenüberliegenden anderen Seite 26 auf dieser anderen Seite 26 der jeweiligen Mittelachse 24 liegt. Die Koppeleinrichtung 14 bildet also eine Art Wechselgelenk, bei dem sich die Lage der entsprechenden Drehachse 20 dieses Wechselgelenks, also die Gelenkachse, immer auf der Seite 24, 26 befindet, in die die Kurve sowie die durch die Kurve hervorgerufene Gelenkbewegung weist. Dabei gibt es im hier gezeigten Beispiel genau zwei vorbestimmte Lagen der Drehachse 20, nämlich eine auf der einen Seite 24 und eine auf der anderen Seite 26. Im vorliegenden Beispiel liegt die Drehachse 20 bei den beiden Elementen 12 in der Mitte auf der einen Seite 24 und bei den beiden Elementen auf der rechten Seite der Fig. 1 auf der anderen Seite 26. Bei den beiden Elementen 12 auf der linken Seite der Fig. 1, deren Enden 16, 18 einander exakt diametral gegenüberliegen, gibt es in dieser aktuellen Situation keine eindeutige Lage der Drehachse 30.

Die Fig. 2 zeigt die Enden von zwei Elementen 12 der in Fig. 1 gezeigten Vorrichtung 10 und die diese beiden Elemente 12 gelenkig verbindende Koppeleinrichtung 14. Die Koppeleinrichtung 14 weist zwei gegenläufig verschwenkbare Koppelelemente 30, 32 identischer Länge auf, die über je ein erstes Gelenk 34, 36 mit dem Ende 16 des einen Elements 12 und über je ein zweites Gelenk 38, 40 mit dem Ende 18 des anderen Elements 12 gelenkig verbunden ist. Die beiden Koppelelemente 30, 32 sind bei einander diametral gegenüberliegenden Enden 16, 18 der beiden Elemente 12 derart parallel angeordnet, dass das mit dem ersten Ende 16 verbundene erste Gelenk 34 mit dem mit dem zweiten Ende 18 verbundenen zweiten Gelenk 40 bezüglich der ersten möglichen Drehachsen-Lage fluchtend angeordnet ist und das mit dem ersten Ende 16 verbundene zweite Gelenk 36 mit dem mit dem zweiten Ende 18 verbundenen ersten Gelenk 38 bezüglich der zweiten möglichen Drehachsen-Lage fluchtend angeordnet ist. Mit anderen Worten bilden die beiden Koppelelemente 30, 32 mit den beiden Enden 16, 18 der Elemente 12 eine Viergelenkkette 42. Viergelenkketten sind im Zusammenhang mit Koppelgetrieben bekannt. Über die hier beschriebene Viergelenkkette 42 wird eine zweiteilige Getriebe-Bahnkurve generiert, bei denen die beiden Teile der Getriebe-Bahnkurve den gegenläufigen Schwenkbewegungen der Koppelelemente 30, 32 entspricht. Auf diese Weise ist es möglich, die unterschiedlichen Lagen der Drehachse 20 aus zwei vorgegebenen Lagen so auszuwählen, dass das im Zusammenhang mit der Fig. 1 beschriebene Wechselgelenk entsteht. Im gezeigten Fall der Fig. 2 ist das Wechselgelenk in Richtung der anderen Seite 26 bewegt und dementsprechend liegt die Drehachse 20 bei den beiden Elementen 12 auf der anderen Seite 26.

In dieser Darstellung ist weiterhin gut sichtbar, dass die Breite B der Elemente 12 im Wesentlichen dem Abstand A der unterschiedlichen Lagen der Drehachse 20, also hier bei dieser Ausgestaltung der Koppeleinrichtung 14 dem Abstand der Gelenke 34, 38; 36, 40 an den jeweiligen Enden eines der Koppelelemente 30, 32 entspricht.

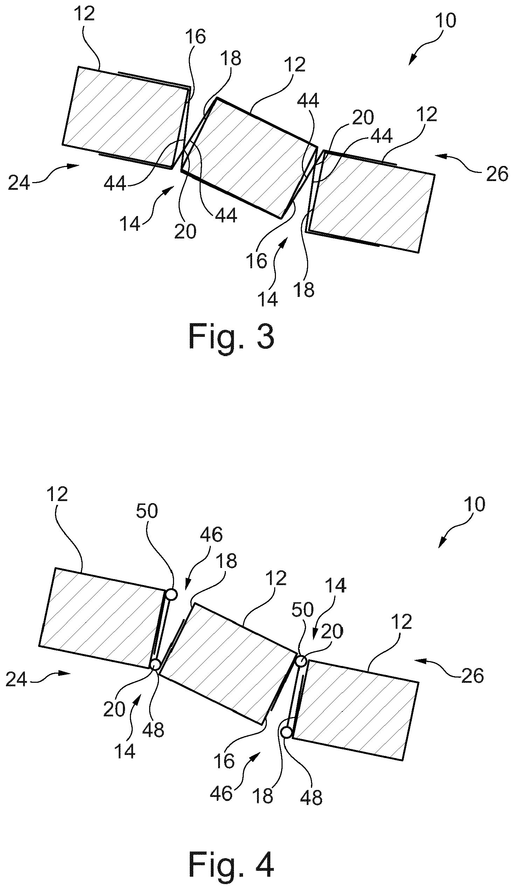

Die Fig. 3 zeigt eine Draufsicht auf eine Reihe von aneinander gekoppelten Elementen 12 der Vorrichtung 10 zum Fördern und/oder Sortieren von Stückgütern, bei der die Koppeleinrichtungen 14 alternativ ausgestaltet sind. Jede der Koppeleinrichtungen weist biegeschlaffe Koppelelemente 44 auf, die je zwei Elemente 12 gelenkig verbinden. Dieser Mechanismus ist von einem Jakobsleiter genannten Spielzeug bekannt. Die biegeschlaffen Koppelelemente 44 sind dabei als Bänder ausgebildet. Sie verlaufen zwischen den Enden 16, 18 der Elemente 12 kreuzweise. Dabei bildet sich in Draufsicht ein Kreuzungspunkt, der die entsprechende Drehachse 20 für die Gelenkbewegung der Koppeleinrichtung 14 markiert. Diese Drehachse 20 ist verschieblich, sodass sich bei dieser Ausgestaltung der Koppeleinrichtung 14 die unterschiedlichen Lagen der Drehachse 20 durch Verschieben der Drehachse 20 entlang des Zwischenraums zwischen den Enden 16, 18 einstellen.

Bei den in den Figuren 1 - 3 gezeigten Ausgestaltungen der Koppeleinrichtung 14 weisen diese mindestens zwei zugstabile Koppelelemente 30, 32, 44 auf, bei denen wechselweise jeweils ihr eines Ende mit dem ersten und ihr anderes Ende mit dem gegenüberliegenden zweiten Element 12 verbunden ist. Die Koppelelemente 30, 32, 44 können als Koppelstangen, Zugseile oder Riemen ausgeführt sein.

Mehrere aneinandergekoppelte Elemente 12 in der oben dargestellten Weise können einen eigenständigen Verbund bilden. Die einzelnen Elemente 12 werden dabei derart geführt, dass sich diese nicht um ihre Vertikalachse drehen können. Andernfalls könnte der Verband auseinandergezogen werden. Die entsprechenden Führungen sind Stand der Technik und werden auch bei bekannten Sortern mit hintereinander angeordneten Elementen 12 eingesetzt. Durch die Prinzip-bedingt minimierten Mindestradien bei der rotatorischen Bewegung der Elemente 12 zueinander ist ein solcher Verbund in der Lage, sich entlang kurvolinearer Strecken fortzubewegen. In geraden Streckenabschnitten liegen die benachbarten Elemente 12 dadurch eng aneinander, in Kurvenabschnitten werden je über die Drehachsen 20 wechselnder Lage zueinander horizontal verdreht.

Die Fig. 4 zeigt schließlich eine Draufsicht auf eine Reihe von aneinander gekoppelten Elementen 12 der Vorrichtung 10 zum Fördern und/oder Sortieren von Stückgütern, bei der die Koppeleinrichtungen 14 gemäß einer ganz anderen Alternative ausgestaltet sind. Jede der Koppeleinrichtungen weist ein Doppelgelenk 46 in Art eines Pendeltürscharniers auf bzw. ist als solches ausgebildet. Ein Pendeltürscharnier bzw. Pendeltürband ist mit zwei federbelasteten Gelenken 48, 50 versehen und ermöglicht ein Durchschwingen von Pendeltüren in beide Durchgangsrichtungen. Bekannt sind solche Türen beispielsweise als Saloontüren. In Seitenansicht hat das Doppelgelenk 46 in Art eines Pendeltürscharniers eine Z-Form, wobei die Federbelastung diese Z-Form in eine zusammengefaltete Position treibt. Entgegen der Federkraft kann man nun den einen oder den anderen äußeren Arm der Z-Form aus der zusammengefalteten Position herausschwenken. Auch auf diese Art kann die Lage der Drehachse 20 für die Gelenkbewegung von der einen zur anderen Seite 24, 26 gewechselt werden.

Die beschriebenen Ausführungsbeispiele sind lediglich Beispiele, die im Rahmen der Ansprüche auf vielfältige Weise modifiziert und/oder ergänzt werden können. Jedes Merkmal, das für ein bestimmtes Ausführungsbeispiel beschrieben wurde, kann eigenständig oder in Kombination mit anderen Merkmalen in einem beliebigen anderen Ausführungsbeispiel genutzt werden. Jedes Merkmal, dass für ein Ausführungsbeispiel einer bestimmten Kategorie beschrieben wurde, kann auch in entsprechender Weise in einem Ausführungsbeispiel einer anderen Kategorie eingesetzt werden.

**Bezugszeichenliste**

| | |
|---|---|
| Vorrichtung zum Fördern und/oder Sortieren | 10 |
| Elemente | 12 |
| Koppeleinrichtung | 14 |
| Ende | 16 |
| Ende | 18 |
| Drehachse | 20 |
| Bahn | 22 |
| eine Seite | 24 |
| andere Seite | 26 |
| Mittelachse (Ende) | 28 |
| Koppelelement | 30 |
| Anderes Koppelelement | 32 |
| Gelenk | 34 |
| Gelenk | 36 |
| Gelenk | 38 |
| Gelenk | 40 |
| Viergelenkkette | 42 |
| biegeschlaffes Koppelelement | 44 |
| Doppelgelenk | 46 |
| federbelastetes Gelenk | 48 |
| federbelastetes Gelenk | 50 |
| Abstand der Drehachsen-Lagen | A |
| Breite der Elemente | B |
| minimaler Abstand benachbarter Elemente | d |
| Länge der Koppeleinrichtung | l |

## Patentansprüche

1. Koppeleinrichtung (14) zum gelenkigen Verbinden von zwei Elementen (12) einer Vorrichtung (10) zum Fördern und/oder Sortieren von Stückgütern, wobei die Koppeleinrichtung (10) je ein Ende (24, 26) der beiden Elemente (12) bezüglich mindestens einer Drehachse (20) in einer Ebene zu beiden Seiten (24, 26) hin gelenkig verbindet und sich die beiden Enden (24, 26) in einer Nulllage diametral gegenüberliegen,
**dadurch gekennzeichnet, dass**
die Koppeleinrichtung (14) derart eingerichtet ist, dass- ausgehend von einer jeweiligen Mittelachse (28) der beiden Enden (24, 26) - die Drehachse (20) bei einer Gelenkbewegung in Richtung der einen Seite (24) auf dieser einen Seite (24) der Mittelachsen (28) und bei einer Gelenkbewegung in Richtung der anderen Seite (26) auf dieser anderen Seite (26) der jeweiligen Mittelachse (28) liegt.

2. Koppeleinrichtung nach Anspruch 1, wobei die Koppeleinrichtung (14) eingerichtet ist, die unterschiedlichen Lagen der Drehachse (20)
- aus zwei oder mehr als zwei vorgegebenen Lagen auszuwählen oder
- durch Verschieben der Drehachse (20) einzustellen.

3. Koppeleinrichtung nach Anspruch 1 oder 2, wobei die Koppeleinrichtung (14) zwei gegenläufig verschwenkbare Koppelelemente (30, 32) identischer Länge aufweist.

4. Koppeleinrichtung nach einem der Ansprüche 1 bis 3, wobei die Koppeleinrichtung (14) eingerichtet ist, mit den beiden Enden (16, 18) der Elemente (12) eine Viergelenckette (42) zu bilden.

5. Koppeleinrichtung nach Anspruch 1 oder 2, wobei die Koppeleinrichtung (14) biegeschlaffe Koppelelemente (44) umfasst, die die beiden Elemente (12) in Art eines Jakobsleiter genannten Spielzeugs gelenkig verbindet.

6. Koppeleinrichtung nach Anspruch 1 oder 2, wobei die Koppeleinrichtung (14) ein Doppelgelenk (46) in Art eines Pendeltürscharniers aufweist.

7. Koppeleinrichtung nach einem der Ansprüche 1 bis 6, wobei die Koppeleinrichtung (14) derart eingerichtet ist, dass der Abstand d der beiden Elemente (12) voneinander bei aus der Nulllage herausbewegter Anordnung der beiden Elemente (12) nur von auf der aktuell genutzten Drehachse (20) liegenden Bauteilen der Koppeleinrichtung (14) bestimmt wird.

8. Koppeleinrichtung nach einem der Ansprüche 1 bis 7, wobei der Abstand A der Lagen der Drehachse (20) bei Gelenkbewegung zur einen Seite (24) und zur anderen Seite (26) größer ist, als die den Abstand zwischen den Enden (16, 18) der entsprechenden Elemente (12) bestimmende Länge L der Koppeleinrichtung (14).

9. Vorrichtung (10) zum Fördern und/oder Sortieren von Stückgütern mit
- mehreren Elementen (12) zur Handhabung der Stückgüter und
- mindestens einer Koppeleinrichtung (14), die je zwei der in Serie angeordneten Elemente (12) miteinander gelenkig verbindet,
**dadurch gekennzeichnet, dass** die Koppeleinrichtung (14) oder zumindest eine der Koppeleinrichtungen (14), vorzugsweise jede der Koppeleinrichtungen (14), als Koppeleinrichtung (14) nach einem der vorhergehenden Ansprüche ausgebildet ist.

10. Vorrichtung nach Anspruch 9, wobei die Breite B der Elemente (12) im Wesentlichen dem Abstand A der unterschiedlichen Lagen der Drehachse (20) entspricht.

11. Vorrichtung nach Anspruch 9 oder 10, wobei die Vorrichtung (10) als ein Sorter, insbesondere als Kreissorter ausgestaltet ist.
